# EUROPEAN PATENT SPECIFICATION

(11) **EP 0 823 647 B1**
(45) Date of publication and mention of the grant of the patent: **23.07.2003**
(21) Application number: 97305872.0
(22) Date of filing: 04.08.1997
(51) Int. Cl.: G02B 6/34

(54) **Arrayed-waveguide grating**
Wellenleiter-Matrix-Gitter
Réseau matrice de guides d'ondes

(30) Priority: 06.08.1996 JP 20675496
(43) Date of publication of application: 11.02.1998
(73) Proprietor: NIPPON TELEGRAPH AND TELEPHONE CORPORATION, Shinjuku-ku, Tokyo 163-19 (JP)
(72) Inventor: Himeno, Akira, Mito-shi, Ibaraki (JP); Okamoto, Katsunari, Mito-shi, Ibaraki (JP); Takahashi, Hiroshi, Mito-shi, Ibaraki (JP)
(74) Representative: Beresford, Keith Denis Lewis

(56) References cited:
- VELLEKOOP A R ET AL: "A SMALL-SIZE POLARIZATION SPLITTER BASED ON A PLANAR OPTICAL PHASED ARRAY" JOURNAL OF LIGHTWAVE TECHNOLOGY, vol. 8, no. 1, 1 January 1990, pages 118-124, XP000104176
- VELLEKOOP A R ET AL: "FOUR-CHANNEL INTEGRATED-OPTIC WAVELENGTH DEMULTIPLEXER WITH WEAK POLARIZATION DEPENDENCE" JOURNAL OF LIGHTWAVE TECHNOLOGY, vol. 9, no. 3, 1 March 1991, pages 310-314, XP000539999
- MESTRIC R ET AL: "1.31-1.55-MUM PHASED-ARRAY DEMULTIPLEXER ON INP" IEEE PHOTONICS TECHNOLOGY LETTERS, vol. 8, no. 5, 1 May 1996, pages 638-640, XP000589261
- AMERSFOORT M R ET AL: "HIGH PERFORMANCE 4-CHANNEL PHASAR WAVELENGTH DEMULTIPLEXER INTEGRATED WITH PHOTODETECTORS" PROCEEDINGS OF THE EUROPEAN CONFERENCE ON OPTICAL COMMUNICATION (EC, MONTREUX, SEPT. 12 - 16, 1993, vol. 3, no. CONF. 19, 12 September 1993, pages 49-52, XP000492285 SWISS ELECTROTECHNICAL ASSOCIATION
- ADAR R: "BROAD-BAND ARRAY MULTIPLEXERS MADE WITH SILICA WAVEGUIDES ON SILICON" JOURNAL OF LIGHTWAVE TECHNOLOGY, vol. 11, no. 2, 1 February 1993, pages 212-219, XP000372719

## Description

The present invention relates to an arrayed waveguides grating, e.g. an optical filter (optical wave multiplexer/divider) for use in wavelength division multiplexed transmissions.

### Prior Art Example 1

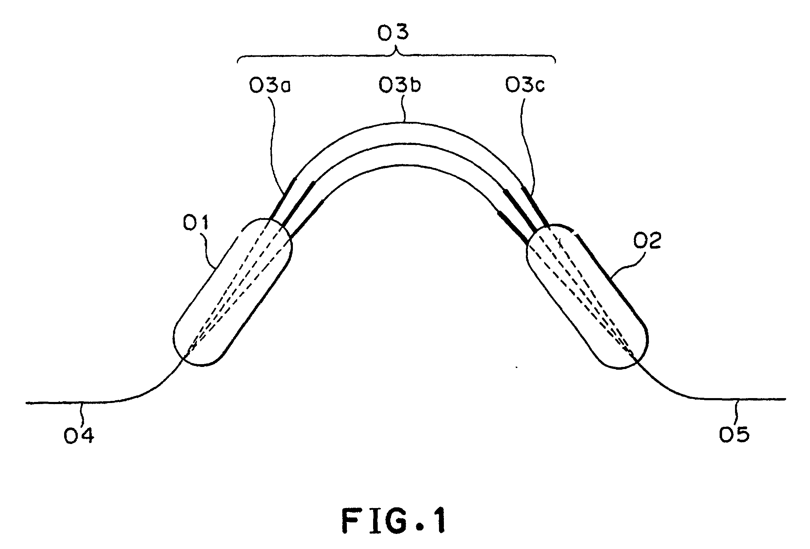

First, a first prior art example will be described with reference to Fig. 1.

Fig. 1 is a schematic view of a prior art optical filter (optical wave multiplexer/divider) for wavelength division multiplexed communications.

In Fig. 1, the reference numerals 01 and 02 indicate slab waveguide lenses, 03 is a plurality of arrayed waveguides, 04 is an input waveguide or input waveguides, and 05 is an output waveguide or output waveguides.

In this case. to appropriately operate the arrayed waveguides grating type optical filter, it is required that in the arrayed waveguides connecting the slab waveguide lenses 01 and 02, the connection point with the lens is on the extension of the straight line radially drawn from the input/output focus of the slab waveguide lens, and lengths of all waveguides adjacent to each other differ by a constant value required in design, and the lengths geometrically increase monotonically.

The above plurality of arrayed waveguides 03, as shown in Fig. 1, is a plurality of arrayed waveguides 03 each of which comprises a straight waveguide 03a - a bend waveguide 03b - and a straight waveguide 03c, which are individually connected.

It is known that characteristics such as optical loss, crosstalk, and the like in the arrayed waveguides grating are improved with decreasing length of the arrayed waveguides.

In view of this fact, although ideally it is desirable that the shortest waveguide length be zero, the practical bend waveguide radius must be greater than a constant value determined by the waveguide structure, and the shortest waveguide length is a finite value from the requirement of optical waveguide layout.

In the arrayed waveguides grating type filter shown in Fig. 1 it is experimentally known that the shortest waveguide length can be practically reduced and, as a result, have superior characteristics.

However, the above arrayed waveguides grating type filter is disadvantageous in that, in the lower waveguide and the upper waveguide of the arrayed waveguides 03, the upper one is necessarily longer in length.

On the other hand, in a filter of wider wavelength spacing, it is required to set the optical length difference to a very small value.

Specifically, where do is a difference in length between adjacent waveguides of the above arrayed waveguides 03, λ₀ is a central wavelength, and n_{g} is a group refractive index, a free spectral range (FSR) is represented by the formula (1).

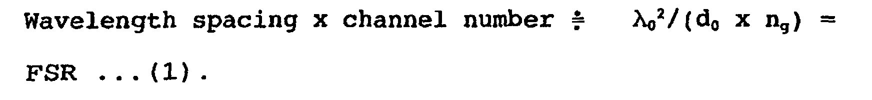

Therefore, when the required wavelength spacing is wide or a plurality of channels are required, it is necessary to set d₀ to a very short value.

However, as described above, due to this geometrical limitation, since in the prior art embodiment there is a lower limit of optical length difference that can be disposed, there is a case where setting the optical length difference to a very short value cannot be geometrically found or, even if achieved, the size of the circuit becomes extraordinarily large. If such a device is to be achieved by a waveguide type, since the size of usable substrate material has a certain limit, it is practically impossible to produce such a device when the circuit size exceeds the limit.

Therefore, it has been difficult to achieve with this construction an arrayed waveguides grating with a wide FSR (Free Spectral Range) which is required to be set to a very short optical length difference, that is, an arrayed waveguides grating with wide in wavelength spacing for separation and multiplexing or a plurality of channels.

### Prior Art Example 2

Next, a second prior art example will be described with reference to Fig. 2. Japanese Patent Application Laying-open No. 6-27339 (corresponding USP 5, 212, 758) discloses an S-formed optical waveguide as the second prior art embodiment.

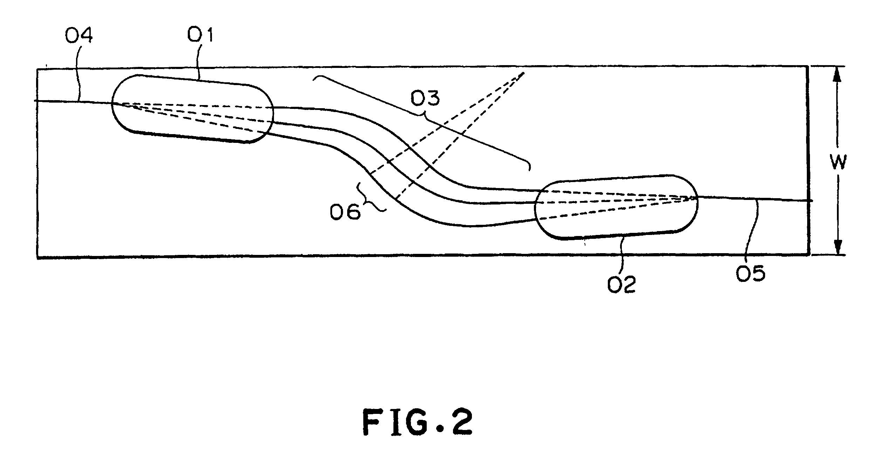

Fig. 2 is a schematic view showing a prior art arrayed waveguides grating type optical filter.

In Fig. 2, the reference numerals 01 and 02 indicate slab waveguide lenses, 03 is a plurality of arrayed waveguides, and 06 is a bend waveguides block. As shown in Fig. 2, the slab waveguide lenses 01 and 02 are connected by the S-formed arrayed waveguides 03, and the entire circuit is point symmetrical. The S-formed arrayed waveguides are designed so that when the inflection point of the S form is directly connected, the individual waveguide lengths are equal. That is, the S-formed optical waveguides are constructed so that the optical length difference, which is required from geometrical layout, is once offset at the inflection point.

In the prior art example shown in Fig. 2, the optical length difference required for filter operation is given by the bend waveguides block 06 in which the open angle is the same about the centre of symmetry of the S-formed arrayed waveguides 03, spacings are constant, and the radius increases by a constant value.

With this construction, since the optical length difference of the circuit is equal to the length difference between the adjacent waveguides of the bend waveguides block 06 (radius difference x open angle), a desired circuit can be designed which has a wide FSR, that is, a very short optical length difference. Therefore, in this configuration, the problem of the first prior art example, that the layout cannot be geometrically found, is eliminated.

However, the configuration as shown in Fig. 2 has a problem that the width w of the circuit is large due to the point symmetry of the S-formed arrayed waveguide layout.

Therefore, there is a disadvantage in that if the circuit size exceeds the effective substrate size, or even if can be laid out on the substrate, the number of circuits that can be disposed on a single substrate is decreased.

A further example of an arrayed waveguide grating using concentrically arranged waveguides is known from Journal of Lightwave Technology, Vol. 8, No. 1, p. 118-124.

Since the number of circuits of the same size that can be produced from a substrate is an important factor for reducing price and cost, the above problem reduces the application area of the optical filter.

The present invention is intended to provide an arrayed waveguides grating which does not have an S-formed structure, which may be a cause of increasing the circuit area, but which still achieves wide FSR properties.

Reference will now be made to the following published article entitled "A Small-Size Polarization Splitter Based on a Planar Optical Phased Array" by A.R. Vellekoop et al, Journal of Lightwave Technology, Vol.8, No. 1, January 1990. This describes an arrayed waveguides grating device of the type, as set forth in the preambles of claims 1 and 2 of the claims attached hereto, comprising:
an input waveguide or a plurality thereof;
an input side slab waveguide lens coupled thereto;
a plurality of arrayed waveguides coupled to the input side slab waveguide lens;
an output side slab waveguide lens coupled to the plurality of arrayed waveguides; and
an output waveguide or a plurality thereof, coupled to the output side slab waveguide lens; wherein the optical length of the respective arrayed waveguides increases or decreases monotonically by a constant difference value between adjacent ones of the arrayed waveguides; wherein
the arrayed waveguides consist of an input side waveguides block, an intermediate waveguides block, and an output side waveguides block;
the input side waveguides block and the output side waveguides block are disposed symmetrically each side of said intermediate waveguides block; and
the intermediate waveguides block comprises a first concentrically bent waveguides block consisting of arcuate concentrically disposed waveguides which are bounded by first and second sector-defining radii extending from the common centre of curvature thereof, and which are located at respective monotonically increased radial distances from the common centre of curvature.

In accordance with a first aspect of the present invention, the arrayed waveguides grating device of this type is characterised in that:
the respective radial distances of the concentrically disposed waveguides are monotonically increased by a constant difference amount; and
the input side waveguides block and the output side waveguides block each consist of a respective straight waveguides block smoothly connected to the input side and to the output side respectively of the intermediate waveguides block, a bend waveguides block smoothly connected to the respective straight waveguides block, and another straight waveguides block smoothly connected to the bend waveguides block.

In accordance with a second aspect of the present invention, the array waveguides grating device of the aforesaid type is characterised in that:
the intermediate waveguides block consists of an odd number of smoothly connected concentric waveguide blocks, including the first concentrically bent waveguides block, each consisting of the same number of concentrically disposed waveguides, which are bounded by respective first and second sector-defining radii extending from respective common centres of curvature, and which are located at respective radial distances from the respective common centres of curvature which radial distances are monotonically increased by a constant difference amount, and wherein the respective common centres of curvature of the concentric waveguide sections are located on alternate sides of the plurality of arrayed waveguides; and
the input side waveguides block and the output side waveguides block each consist of a respective straight waveguides block smoothly connected to the input side and to the output side respectively of the intermediate waveguides block, a bend waveguides block smoothly connected to the respective straight waveguides block, and another straight waveguides block smoothly connected to the bend waveguides block.

The above and other preferred features and advantages of the present invention will become more apparent from the following description of the embodiments thereof taken in conjunction with the accompanying drawings in which:
Fig. 1 is a schematic view showing a first prior art example of an optical arrayed waveguides grating filter;
Fig. 2 is a schematic view showing a second prior art example of an optical arrayed waveguides grating filter;
Fig. 3 is a schematic view showing a first embodiment of an optical arrayed waveguides grating filter in accordance with the present invention;
Fig. 4 is a schematic view showing a second embodiment of an optical arrayed waveguides grating filter also in accordance with the present invention;
Fig. 5A is a schematic view showing the waveguide layout of an embodiment of the arrayed waveguide grating filter according to the present invention;
Fig. 5B is a schematic view showing the waveguide layout of the second prior art example of an arrayed waveguides grating filter;
Fig. 6 is a schematic view showing the waveguide layout of an embodiment of the arrayed waveguides grating filter according to the present invention;
Fig. 7A is a schematic view showing the waveguide layout of an embodiment of the arrayed waveguide grating filter according to the present invention;
Fig. 7B is an enlarged schematic view of section Z in Fig. 7A;
Fig. 8 is a graph showing an optical loss for a 4-channel wave division using the embodiment of the arrayed waveguides grating filter according to the present invention.

Specifically, in an arrayed waveguide grating type optical filter with wide FSR properties, of low cost, that is, small in size, arrayed waveguides (first waveguide block) connected to one slab waveguide lens has a same optical length difference to the individual contacting waveguides, and the optical length difference monotonically increases or decreases, the waveguide block being formed of straight - curved - and straight waveguides in this order from the slab waveguide lens, the end points existing on a straight line and having an intersection angle of 90 degrees to the straight line, spacings between adjacent intersection points are constant, and the other arrayed waveguides (second waveguide block) are disposed in plane symmetrically to the above arrayed waveguides (first waveguide block), and both cf the waveguides blocks are connected with a bend connection waveguides block.

The optical length difference occurring in the first waveguides block and that occurring in the second waveguides block may have optional values.

The bend connection waveguides block has a function to give an optical length difference which offsets the optical length difference produced in the first and second waveguides blocks which is geometrically required but unnecessary for operation of the circuit, and is required in design.

Therefore, since, with the construction of the present invention, the optical length difference can be set flexibly, a filter of wide FSR properties can be achieved. Further, with the construction of the present invention, it is unnecessary to use a point symmetrical geometrical layout which has been a defect of the second prior art example of the arrayed waveguides grating type optical filter in which the optical length difference is once set to zero only in the waveguide group connected to the slab waveguide lens.

As a result, the problem of too large an effective area of the circuit is eliminated.

A first embodiment of the present invention will now be described in detail.

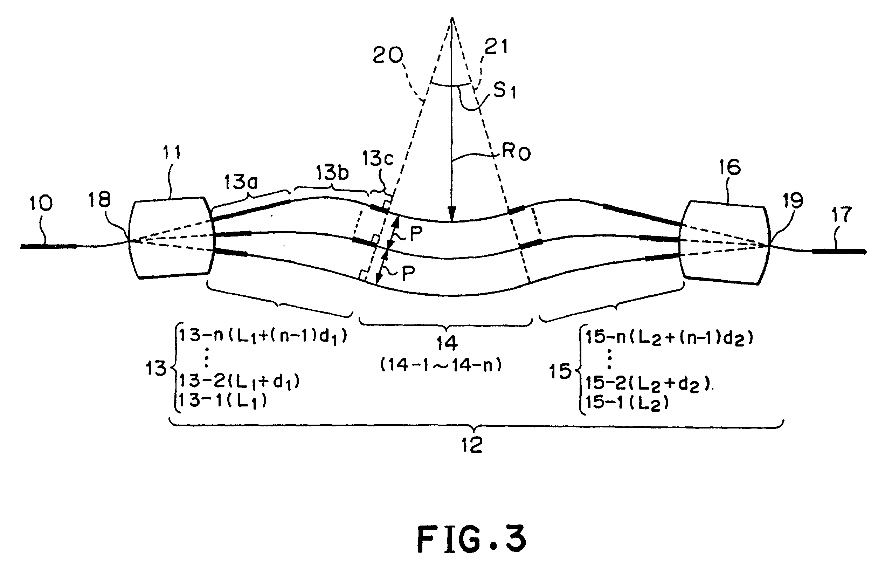

Fig. 3 is a schematic view showing the first embodiment of the optical arrayed waveguides grating.

The optical arrayed waveguides grating of the first embodiment, as shown in Fig. 3, comprises an input waveguide or input waveguides 10, an input side slab waveguide lens 11, arrayed waveguides 12, an output side waveguide lens 16, and an output waveguide or output waveguides 17, and is arranged as follows.
1) The optical length of the arrayed waveguides 12 monotonically increases by a constant value between the adjacent waveguides.
2) The arrayed waveguides 12 comprises an input side waveguide block 13, an intermediate waveguide block 14, and an output side waveguide block 15.
3) The intermediate waveguide block 14 comprises a concentrically bent arcuate waveguides block in which the arcuate waveguides are concentric and bounded by common radii, and at radial distances from the common centre of curvature which monotonically increase by a constant difference amount between adjacent waveguides.
4) The input side waveguides block 13 and the output side waveguides block 15 are line symmetrical about the bisector of the vertical angle of the intermediate waveguides block 14.
5) The input side waveguides block 13 comprises a first straight waveguides block 13a, a bend waveguides block 13b, and a second straight waveguides block 13c in this order from the input side slab waveguide lens 11 side, and the bend waveguides block 13b are smoothly connected to the first and second straight waveguides blocks 13a and 13c.
6) The optical length of the input side waveguides block 13 monotonically increases by a constant value between adjacent waveguides.
7) The waveguides of the first straight waveguides block 13a, when extended, all cross at an input side focus 18 of the input side slab waveguide lens 11.
8) The input side waveguides block 13 is smoothly connected to the intermediate waveguides block 14.

First, the arrayed waveguides of the input side waveguides block 13 will be described.

By giving desired filter properties, the number of input/output waveguides, a focal length f of the slab waveguide lens, an open angle S from the lens focus of the arrayed waveguides, the number n of the arrayed waveguides, and a required optical length difference d₀ of the arrayed waveguide grating are determined.

Next, the construction of the first arrayed waveguides block 13 is determined as follows.

In the present embodiment, individual waveguides (13-1 to 13-n) of the first arrayed waveguides block 13 have an optical length difference of d₁ between adjacent waveguides, when the lower side waveguide in Fig. 3 is referred to a first waveguide (13-1), optical length of the individual waveguide sequentially (13-2,..., 13-n) monotonically increases (L₁, L₁+d₁,..., L₁+(n-1)d₁).

Further, the individual waveguides must be disposed so that they cross perpendicularly to a first reference line 20 from the vertex angle of the waveguides 14 for connecting the arrayed waveguides, and an adjacent crosspoint distance to the first reference line 20 is a constant value (p).

However, to avoid unnecessary coupling between the individual waveguides (13-1 to 13-n), the value p must be not less than a value determined by the waveguide structure.

Still further, p is preferably its smallest value to reduce the size of the entire circuit.

Here, the optical length difference d₁ may be theoretically an optional value because it is eventually adjusted by the connection waveguide.

Layout of such an arrayed waveguide can be designed by forming each optical waveguide (13-1, 13-2,...,13-n) from the first straight waveguide 13a present on the extension of the straight line radially coming from the input side focus 18 of the first slab waveguide lens 11, the bend waveguide 13b smoothly connecting to the first straight waveguide 13a, and the second straight waveguide 13c having an equal inclination at the connection point to the bend waveguide 13b and the extension perpendicularly crossing to the first reference line 20, and appropriately adjusting the lengths of the straight waveguides, the radius of the bend waveguides and the open angle of the bend.

In Fig. 3, when showing the first arrayed waveguides 13 and the second arrayed.waveguides 15, a thick line indicates a straight waveguide, and a thin line indicates a bend waveguide.

Design value of the waveguide length at the part crossing the reference line has a flexibility.

That is, even when a straight waveguide of a common length is added to or subtracted from all these straight waveguides 13c, the geometrical layout required for the present invention is satisfied.

However, the total length of the circuit is desirably as short as possible, the present embodiment shows the straight waveguide 13c of the smallest length, and in Fig. 3, the length of the second straight waveguide 13c of the lowest waveguide 13-1 in the Figure is zero.

Further, as a matter of course, it is desirable that all the radii of the bend waveguides 13b are greater than a minimum radius R₀ causing an unnecessary optical loss increase.

Next, the second arrayed waveguides of the output side waveguidesblock 15 will be described.

Preferably, the second arrayed waveguides block 15 and the first arrayed waveguides block 13 are disposed line symmetrically about the bisector of the vertex angle S₁ of the intermediate waveguides block 14.

In this case, the optical length difference d₂ generated in the second arrayed waveguides block 15 is equal to the optical length difference d₁ generated in the arrayed waveguides block 13.

However, the arrayed waveguides grating of the present invention is not limited to the above line symmetrical arrangement. That is, it is sufficient that the waveguide spacing p at the crosspoint of the output side channel waveguides block 15 and a second reference line is equal to the spacing P between adjacent crosspoints in the first arrayed waveguide block 13, lengths of the straight lines and bend constituting the second arrayed waveguide block 15 are varied, and the resulting optical length difference d₂ is not necessary to be equal to the optical length difference d₁ of the first arrayed waveguide block 13.

Next, the structure of the intermediate waveguides block 14 will be described.

The intermediate waveguides block 14 comprises a concentrically bent arcuate waveguides block (14-1 to 14-n), in the bend waveguide having the smallest radius, the centre of the circle is on the first reference line 20 and the second reference line 21, the bend waveguides block has an open angle of S₁ which is all equal to each other, and the smallest radius of the bend waveguide group is R₀.

To achieve a compact circuit, the smallest radius R₀ is preferably equal to the minimum radius that can avoid the above-described optical loss increase.

In the arrayed waveguide block of the present invention, the intermediate waveguides block (14-1 to 14-n), of which the centre is on the first reference line 20 and the second reference line 21, the open angle is the same vertical angle S₁, and the radius increases by an increment of p, are sequentially connected to the first arrayed waveguides block (13-1 to 13-n). The optical length difference generated in the bend waveguides group monotonically increases by a constant value between adjacent waveguides, which is automatically given by the formula: S₁ x p.

Therefore, a desired optical length difference d₀ can be obtained when the open angle (S₁) of the bend waveguides block of the intermediate waveguides block 14 is set, since S₁ x p = d₁ + d₂ ± d₀ (either of ± is possible) is met.

### Second embodiment

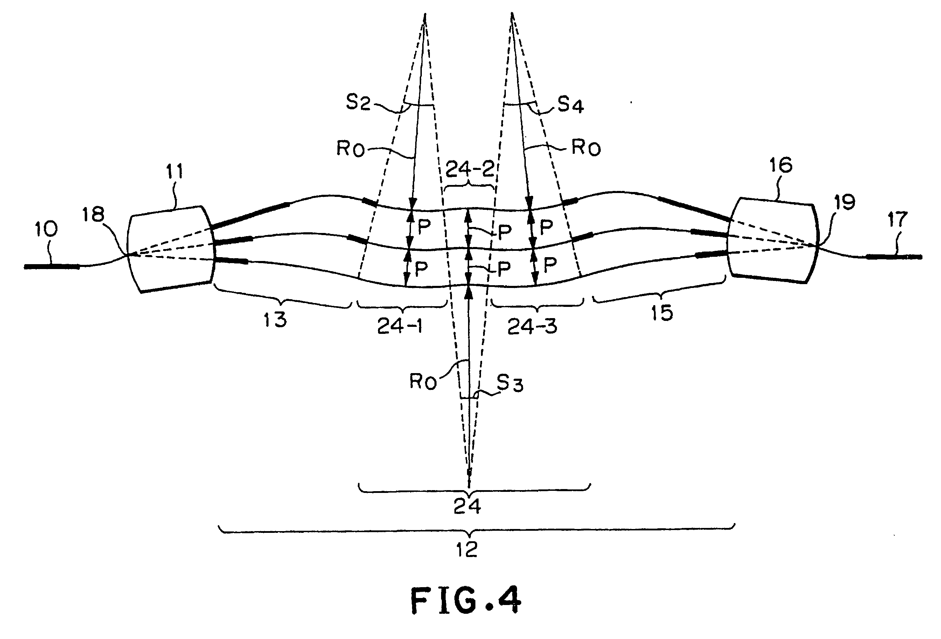

Fig. 4 is a schematic view showing a second embodiment of the arrayed waveguides grating according to the present invention.

In the present embodiment, the connecting waveguides 14 of the arrayed waveguides grating of the first embodiment are divided into an odd number of units, and the adjacent waveguides of the respective units are all concentric arcuate waveguides, of which the respective vertices are provided on alternate sides of the assembly.

That is, while the intermediate waveguide 14 in the first embodiment comprises a single concentrically bent arcuate waveguides block, in the present embodiment, it comprises three concentrically bent arcuate waveguides blocks 24-1, 24-2, and 24-3.

In Fig. 4, the minimum radii of the bend waveguides 24-1, 24-2, and 24-3 are not necessarily the same, but are preferably greater than the minimum radius that does not generate an optical loss increase, and smoothly connected.

The present embodiment provides the same function as that of the first embodiment when the condition (S₂ + S₄ - S₃) × p = d₁ + d₂ ± dₒ is met.

Preferred embodiments showing the effect of the present invention will be described in detail below. However, the present invention is not limited to the embodiments.

### Embodiment 1

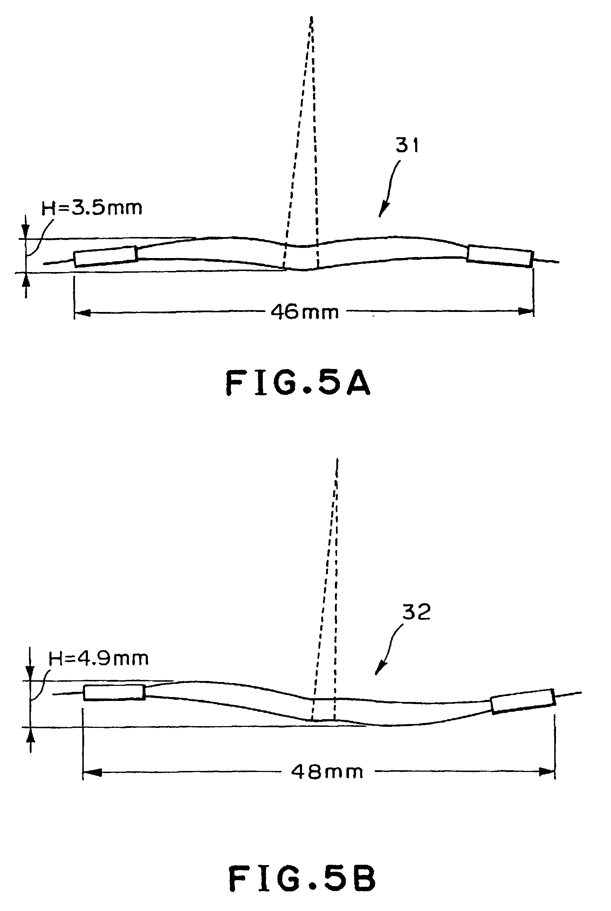

The result of waveguide layout of the arrayed waveguide grating filter made based on the embodiment shown in Fig. 3 is shown in Fig. 5.

Fig. 5A is a waveguide layout example based on the filter design of an equivalent refractive index of waveguide of 1.45, a minimum bend radius of 5 mm, a central wavelength of about 1552 nm, a frequency interval of 2000 GHz, and an FSR of about 47000 GHz.

The filter of such properties is required to have a slab waveguide lens focal length of about 6600 µm, 81 arrayed waveguides, and an optical length difference d₀ of about 4.28 µm.

An example of waveguide layout of an arrayed waveguide grating filter 31 according to the present invention shown Fig. 3 is shown in Fig. 5A.

Further, in the above-described prior art example 1, such a geometrical layout which satisfies these properties cannot be found. An example of arrayed waveguides grating filter 32 is shown in Fig. 5B, which is laid out based on the prior art example 2 with a waveguide spacing on the reference line of 30 µm.

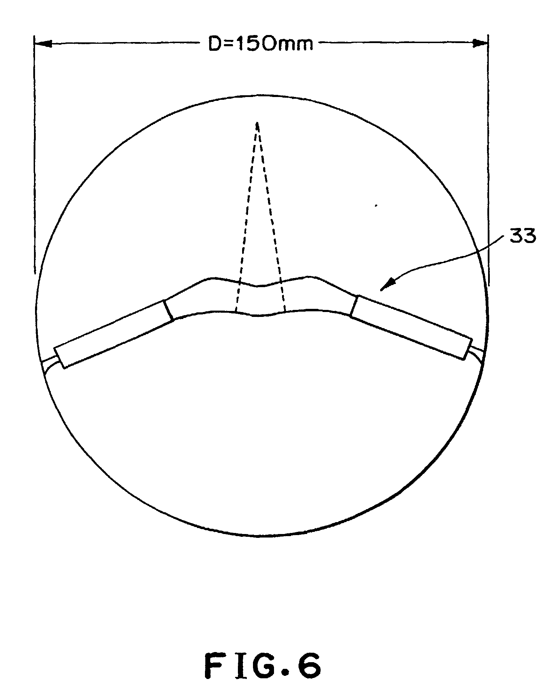

Further, Fig. 6 is an example of waveguide layout of an arrayed waveguides filter 33 with a frequency interval of about 100 GHz, an FSR of about 14600 GHz, and an optical length difference d₀ of about 13.4 µm.

It can be seen that the circuit is contained in a circle with a diameter (D) of 15 cm.

In the prior art example 1, the horizontal width of the circuit is as large as 20 cm.

As can be seen from the result of the above embodiment since the individual components are disposed almost on a straight line as shown in Fig. 5A, an effect for reducing the circuit width, and avoidance of limitation of substrate size as shown in Fig. 6 can be achieved.

With such properties, an inexpensive optical filter can be provided.

### Embodiment 2

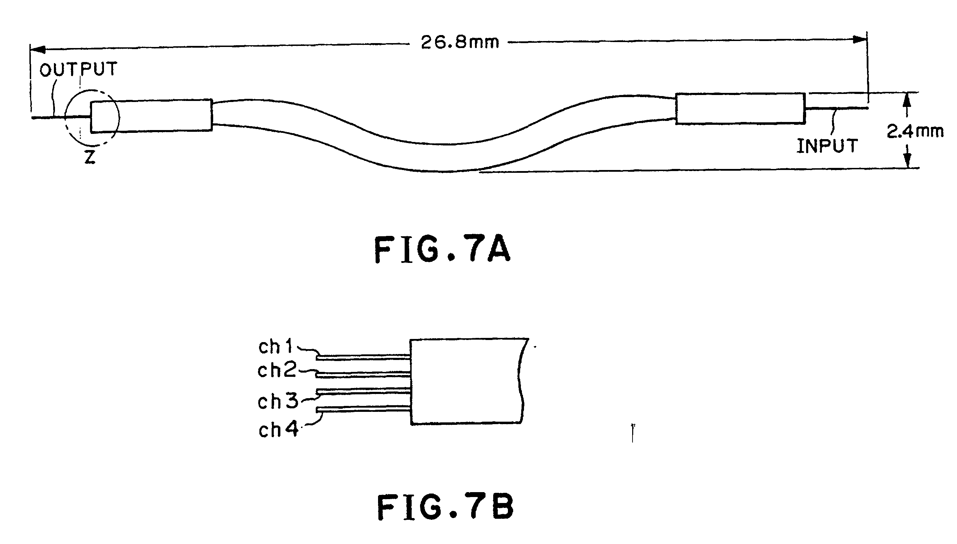

Fig. 7A shows a waveguide layout of the arrayed waveguide grating filter made based on the embodiment shown in Fig. 3.

The arrayed waveguide grating filter of Fig. 7A is based on filter design with a channel spacing of 16000 GHz, an FSR of about 200,000 GHz, and a central wavelength of 1.52 µm. Such a filter is required to have an optical length difference do of about 0.97 µm, a slab waveguide lens focal length of about 4030 µm, and 44 arrayed waveguides.

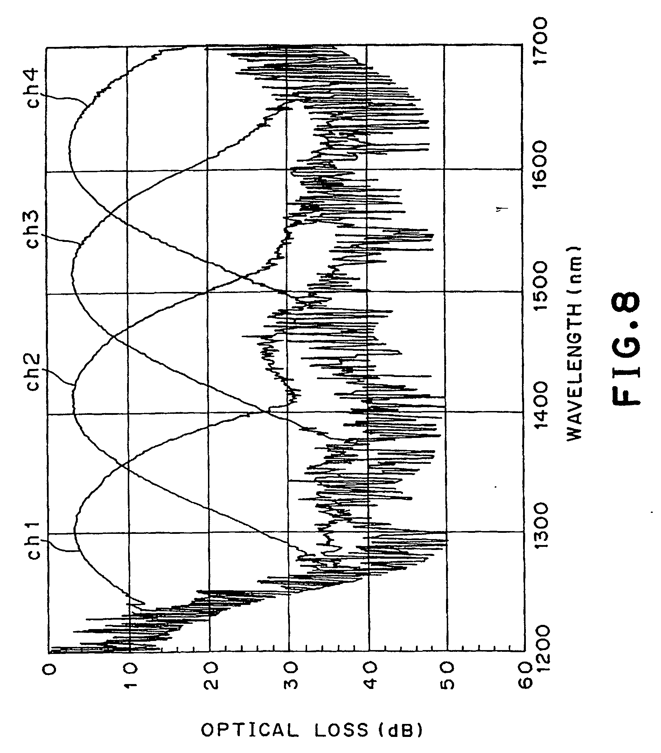

The optical loss of the case of 4 channels (ch1, ch2, ch3 and ch4) is investigated using this arrayed waveguides grating filter. The result is shown in Fig. 8.

It can be found from the result that when wave division of light is made using the arrayed waveguides grating filter of the present invention, wave division is efficiently made with reduced optical loss.

As described above in detail with experimental examples, since the individual components are disposed almost on a straight line, the circuit width can be reduced and limitation of substrate size can be avoided.

Therefore, by this effect, an inexpensive optical filter can be provided. Further, an optical filter with wide FSR can be provided at a low price.

## Claims

1. An arrayed waveguides grating device comprising:
an input waveguide (10) or a plurality thereof (Ch1-Ch4);
an input side slab waveguide lens (11) coupled thereto;
a plurality of arrayed waveguides (12) coupled to said input side slab waveguide lens (11);
an output side slab waveguide lens (16) coupled to said plurality of arrayed waveguides (12); and
an output waveguide (17) or a plurality thereof, coupled to said output side slab waveguide lens (16); wherein the optical length of the respective arrayed waveguides increases or decreases monotonically by a constant difference value between adjacent ones of said arrayed waveguides (12); wherein
said arrayed waveguides consist of an input side waveguides block (13), an intermediate waveguides block (14), and an output side waveguides block (15);
said input side waveguides block (13) and said output side waveguides block (15) are disposed symmetrically each side of said intermediate waveguides block (14). and
said intermediate waveguides block (14) consists of a concentrically bent waveguides block (14) of arcuate concentrically disposed waveguides (14-1 to 14-n) which are bounded by first and second sector-defining radii (20,21) extending from the common centre of curvature thereof, and which are located at respective monotonically increased radial distances (Ro,-) from said common centre of curvature;
**characterised in that**:
said respective radial distances (Ro,-) of said concentrically disposed waveguides are monotonically increased by a constant difference amount (P); and
said input side waveguides block (13) and said output side waveguides block (15) each consist of a respective straight waveguides block (13c,-) smoothly connected to the input side and to the output side respectively of said intermediate waveguides block (14), a bend waveguides block (13b,-) smoothly connected to the respective straight waveguides block (13c,-), and another straight waveguides block (13a,-) smoothly connected to said bend waveguides block (13b,-).

2. An arrayed waveguides grating device comprising:
an input waveguide (10) or a plurality thereof (Ch1-Ch4);
an input side slab waveguide lens (11) coupled thereto;
a plurality of arrayed waveguides (12) coupled to said input side slab waveguide lens (11);
an output side slab waveguide lens (16) coupled to said plurality of arrayed waveguides (12); and
an output waveguide (17) or a plurality thereof, coupled to said output side slab waveguide lens (16); wherein the optical length of the respective arrayed waveguides increases or decreases monotonically by a constant difference value between adjacent ones of said arrayed waveguides (12); wherein
said arrayed waveguides consist of an input side waveguides block (13), an intermediate waveguides block (24), and an output side waveguides block (15);
said input side waveguides block (13) and said output side waveguides block (15) are disposed symmetrically each side of said intermediate waveguides block (14,24); and
said intermediate waveguides block comprises a first concentrically bent waveguides block (24-2) consisting of arcuate concentrically disposed waveguides which are bounded by first and second sector-defining radii (20,21) extending from the common centre of curvature thereof, and which are located at respective monotonically increased radial distances (Ro) from said common centre of curvature;
**characterised in that**:
said intermediate waveguides block (24) consists of an odd number of smoothly connected concentric waveguide blocks (24-1, 24-2, 24-3), including said first concentrically bent waveguides block (24-2), each consisting of the same number of concentrically disposed waveguides, which are bounded by respective first and second sector-defining radii (20,21) extending from respective common centres of curvature, and which are located at respective radial distances (Ro,-) from the respective common centres of curvature which radial distances are monotonically increased by a constant difference amount (P), and wherein said respective common centres of curvature of said concentric waveguide sections (24-1, 24-2, 24-3) are located on alternate sides of said plurality of arrayed waveguides (12); and
said input side waveguides block (13) and said output side waveguides block (15) each include a respective straight waveguides block (13c) smoothly connected to the input side and to the output side respectively of said intermediate waveguides block (24), a bend waveguides block (13b,-) smoothly connected to the respective straight waveguides block (13c,-), and another straight waveguides block (13a,-) smoothly connected to said bend waveguides block (13b,-).

## Patentansprüche

1. Gittervorrichtung von regelmäßig angeordneten Wellenleitern mit:
einem Eingangswellenleiter (10) oder einer Vielzahl davon (Ch1-Ch4);
einer damit gekoppelten eingangsseitigen Scheibenwellenleiterlinse (11);
einer Vielzahl von regelmäßig angeordneten Wellenleitern (12), die mit der eingangsseitigen Scheibenwellenleiterlinse (11) gekoppelt sind;
einer ausgangsseitigen Scheibenwellenleiterlinse (16), die mit der Vielzahl von regelmäßig angeordneten Wellenleitern (12) gekoppelt ist; und
einem Ausgangswellenleiter (17) oder einer Vielzahl davon, die mit der ausgangsseitigen Scheibenwellenleiterlinse (16) gekoppelt sind; wobei die optische Länge der jeweiligen regelmäßig angeordneten Wellenleiter um einen konstanten Differenzwert zwischen benachbarten der regelmäßig angeordneten Wellenleiter (12) monoton größer oder kleiner wird; wobei
die regelmäßig angeordneten Wellenleiter aus einem eingangsseitigen Wellenleiterblock (13), einem dazwischenliegenden Wellenleiterblock (14), und einem ausgangsseitigen Wellenleiterblock (15) bestehen;
der eingangsseitige Wellenleiterblock (13) und der ausgangsseitige Wellenleiterblock (15) auf jeder Seite des dazwischenliegenden Wellenleiterblocks (14) symmetrisch angeordnet sind; und
der dazwischenliegende Wellenleiterblock (14) aus einem konzentrisch gebogenen Wellenleiterblock (14) von bogenförmig konzentrisch angeordneten Wellenleitern (14-1 bis 14-n) besteht, die durch erste und zweite von dem ihnen gemeinsamen Krümmungszentrum ausgehende sektordefinierende Radien (20, 21) begrenzt sind, und die sich bei jeweiligen monoton gesteigerten radialen Entfernungen (Ro,-) von dem gemeinsamen Krümmungszentrum befinden;
**dadurch gekennzeichnet, dass**:
die jeweiligen radialen Entfernungen (Ro,-) der konzentrisch angeordneten Wellenleiter um einen konstanten Differenzbetrag (P) monoton gesteigert sind; und
sowohl der eingangsseitige Wellenleiterblock (13) als auch der ausgangsseitige Wellenleiterblock (15) aus einem jeweils geraden Wellenleiterblock (13c,-) bestehen, die jeweils mit der Eingangsseite und der Ausgangsseite des dazwischenliegenden Wellenleiterblocks (14) glatt verbunden sind, einem gebogenen Wellenleiterblock (13b,-), der glatt mit dem jeweiligen geraden Wellenleiterblock (13c,-) verbunden ist, und einem weiteren geraden Wellenleiterblock (13a,-), der mit dem gebogenen Wellenleiterblock (13b,-) glatt verbunden ist.

2. Gittervorrichtung von regelmäßig angeordneten Wellenleitern mit:
einem Eingangswellenleiter (10) oder einer Vielzahl davon (Ch1-Ch4);
einer damit gekoppelten eingangsseitigen Scheibenwellenleiterlinse (11);
einer vielzahl von regelmäßig angeordneten Wellenleitern (12), die mit der eingangsseitigen Scheibenwellenleiterlinse (11) gekoppelt sind;
einer ausgangsseitigen Scheibenwellenleiterlinse (16), die mit der Vielzahl von regelmäßig angeordneten Wellenleitern (12) gekoppelt ist; und
einem Ausgangswellenleiter (17) oder einer Vielzahl davon, die mit der ausgangsseitigen Scheibenwellenleiterlinse (16) gekoppelt sind; wobei die optische Länge der jeweiligen regelmäßig angeordneten Wellenleiter um einen konstanten Differenzwert zwischen benachbarten der regelmäßig angeordneten Wellenleiter (12) monoton größer oder kleiner wird; wobei
die regelmäßig angeordneten Wellenleiter aus einem eingangsseitigen Wellenleiterblock (13), einem dazwischenliegenden Wellenleiterblock (14), und einem ausgangsseitigen Wellenleiterblock (15) bestehen;
der eingangsseitige Wellenleiterblock (13) und der ausgangsseitige Wellenleiterblock (15) auf jeder Seite des dazwischenliegenden Wellenleiterblocks (14) symmetrisch angeordnet sind; und
der dazwischenliegende Wellenleiterblock (14) einen konzentrisch gebogenen Wellenleiterblock (24-2) umfasst, der aus bogenförmig konzentrisch angeordneten Wellenleitern besteht, die durch erste und zweite von dem ihnen gemeinsamen Krümmungszentrum ausgehende sektordefinierende Radien (20, 21) begrenzt sind, und die sich bei jeweiligen monoton gesteigerten radialen Entfernungen (Ro) von dem gemeinsamen Krürnrnungszentrum befinden;
**dadurch gekennzeichnet, dass**:
der dazwischenliegende Wellenleiterblock (24) aus einer ungeraden Anzahl von glatt verbundenen konzentrischen Wellenleiterblöcken (24-1, 24-2, 24-3) besteht, die den ersten konzentrisch gebogenen Wellenleiterblock (24-2) umfassen, wobei jeder aus der selben Anzahl von konzentrisch angeordneten Wellenleitern besteht, die durch jeweiligc erste und zweite von dem ihnen jeweilig gemeinsamen Krümmungszentren ausgehende sektordefinierende Radien (20, 21) begrenzt sind, und die sich bei jeweiligen radialen Entfernungen (Ro,-) von den jeweiligen gemeinsamen Krümmungszentren befinden, deren radiale Entfernungen um einen konstanten Differenzbetrag (P) monoton gesteigert sind, und wobei sich die jeweiligen gemeinsamen Krümmungszentren der konzentrischen Wellenleitnrsektoren (24-1, 24-2, 24-3) auf wechselnden Seiten der Vielzahl von Wellenleiter-Matrizen (12) befinden; und
sowohl der eingangsseitige Wellenleiterblock (13) als auch der ausgangsseitige Wellenleiterblock (15) jeweils einen geraden Wellenleiterblock (13c), die jeweils mit der Eingangsseite und der Ausgangsseite des dazwischenliegenden Wellenleiterblocks (24) glatt verbunden sind, einen gebogenen Wellenleiterblock (13b,-), der mit dem jeweiligen geraden Wellenleiterblock (13c,-) glatt verbunden ist, und einen weiteren geraden Wellenleiterblock (13a,-) umfassen, der mit dem gebogenen Wellenleiterblock (13b,-) glatt verbunden ist.

## Revendications

1. Réseau matrice de guide d'ondes comprenant :
- un guide d'ondes (10) d'entrée ou plusieurs d'entre eux (Ch1 à Ch4);
- une lentille (11) de guide d'ondes plan du côté de l'entrée, qui y est couplée ;
- une pluralité de guides d'ondes (12) en matrice couplée à la lentille (11) de guide d'ondes plan du côté de l'entrée ;
- une lentille (16) de guide d'ondes plan du côté de la sortie, qui est couplée à la pluralité de guides d'ondes (12) en matrice ;
- un guide d'ondes (17) de sortie ou une pluralité d'entre eux, couplés à la lentille (16) de guide d'ondes plan du côté de la sortie, la longueur optique des guides d'ondes respectifs en matrice augmentant ou diminuant de manière monotone d'une valeur de différence constante entre des guides d'ondes (12) voisins en matrice ; dans lequel
les guides d'ondes en matrice consistent :
- en un bloc (13) de guide d'ondes du côté de l'entrée,
- en un bloc (14) intermédiaire de guide d'ondes, et
- en un bloc (15) de guide d'ondes du côté de la sortie ;
le bloc (13) de guide d'ondes du côté de l'entrée et le bloc (15) de guide d'ondes du côté de la sortie étant disposés symétriquement de chaque côté du bloc (14) intermédiaire de guide d'ondes, et
le bloc (14) intermédiaire de guide d'ondes consiste en un bloc (14) de guide d'ondes courbés concentriquement de guides d'ondes (14 - 1 à 14 - n ) arqués disposés concentriquement qui sont liés par de premier et deuxième rayons (20, 21), définissant des secteurs partant de leur centre commun de courbure, et qui sont disposés à des distances (Ro, - ) radial respectives, qui augmentent de manière monotone, du centre commun de courbure ;
**caractérisé en ce que** :
les distances (Ro, -) radiales respectives des guides d'ondes disposés concentriquement augmentent d'une manière monotone d'une quantité (P) de différence constante ; et
le bloc (13) de guide d'ondes du côté de l'entrée et le bloc (15) de guide d'ondes du côté de la sortie consiste chacun en un bloc (13c,-) de guide d'ondes respectif (3) relié en ligne douce au côté d'entrée et au côté de sortie respectivement du bloc (14) intermédiaire de guide d'ondes, en un bloc (13b,-) courbé de guide d'ondes relié en ligne douce au bloc (13c, -) de guide d'ondes respectifs (3) et en un autre bloc (13a - ) de guide d'ondes (3) relié en ligne douce au bloc (13b- ) de guide d'ondes courbés.

2. Réseau matrice de guide d'ondes comprenant :
- un guide d'ondes (10) d'entrée ou plusieurs d'entre eux (Ch1 à Ch4);
- une lentille (11) de guide d'ondes plan du côté de l'entrée qui y est couplée ;
- une pluralité de guides d'ondes (12) en matrice, qui est couplée à la lentille (11) de guide d'ondes plan du côté de l'entrée ;
- une lentille (16) de guide d'ondes plan du côté de la sortie, qui est couplée à la pluralité de guides d'ondes (12) en matrice ;
- un guide d'ondes (17) de sortie ou une pluralité d'entre eux, couplés à la lentille (16) de guide d'ondes plan du côté de la sortie, la longueur optique des guides d'ondes respectifs en matrice augmentant ou diminuant de manière monotone d'une valeur de différence constante entre des guides d'ondes (12) voisins en matrice ; dans lequel
les guides d'ondes en matrice consistent en un bloc (13) de guide d'ondes du côté de l'entrée, en un bloc (14) intermédiaire de guide d'ondes, et en un bloc (15) de guide d'ondes du côté de la sortie ;
le bloc (13) de guide d'ondes du côté de l'entrée et le bloc (15) de guide d'ondes du côté de la sortie étant disposés symétriquement de chaque côté du bloc (14, 24 ) intermédiaire de guide d'ondes, et
le bloc intermédiaire de guide d'ondes consiste en un bloc (24-2) de guide d'ondes courbés concentriquement de guides d'ondes (24 - 2 ) arqués disposés concentriquement qui sont liés par de premier et deuxième rayons (20, 21), définissant des secteurs, partant de leur centre commun de courbure et qui sont disposés à des distances (Ro, - ) radiales respectives, qui augmentent de manière monotone, du centre commun de courbure ;
**caractérisé en ce que** :
- le bloc (24) intermédiaire de guide d'ondes consiste en un nombre impair de blocs (24-1, 24-2, 24-3) de guide d'ondes reliés en ligne douce, incluant le premier bloc (24-2) de guide d'ondes courbés concentriquement, chacun consistant en le même nombre de guides d'ondes disposés concentriquement, qui sont liés par des premier et second rayons (20, 21) respectifs définissant des secteurs, s'étendant à partir des centres communs respectifs de courbures, et qui sont placés à des distances (Ro, -) radiales respectives des centres communs respectifs de courbure, ces distances radiales augmentant d'une manière monotone d'une quantité (P) de différence constante et les centres communs respectifs de courbure des sections (24-1, 24-2, 24-3) de guides d'ondes concentriques étant disposés sur des côtés alternés de la pluralité de guide d'ondes (12) en matrice et,
le bloc (13) de guide d'ondes du côté de l'entrée et le bloc (15) de guide d'ondes du côté de la sortie consiste chacun en un bloc (13c,) respectf de guide d'ondes droits relié en ligne douce au côté d'entrée et au côté de sortie respectivement du bloc (24) intermédiaire de guide d'ondes, en un bloc (13b,-) courbé de guide d'ondes relié en ligne douce au bloc (13c, -) respectif de guide d'ondes droits et en un autre bloc (13a - ) de guide d'ondes droits, relié en ligne douce au bloc (13b- ) de guide d'ondes courbés.
